# EUROPÄISCHE PATENTSCHRIFT

(11) **EP 0 591 243 B1**
(45) Veröffentlichungstag und Bekanntmachung des Hinweises auf die Patenterteilung: **25.10.1995**
(21) Anmeldenummer: 92910769.6
(22) Anmeldetag: 23.05.1992
(51) Int. Cl.: B01J 20/28, E04H 6/42, C09K 3/32

(54) **ABSORPTIONSMATTE, INSBESONDERE FÜR ORGANISCHE KOHLENWASSERSTOFFE**
ABSORBENT MAT, ESPECIALLY FOR ORGANIC HYDROCARBONS
MATELAS D'ABSORPTION, NOTAMMENT D'HYDROCARBURES ORGANIQUES

(30) Priorität: 22.06.1991 DE 4120701; 07.11.1991 DE 4136647
(43) Veröffentlichungstag der Anmeldung: 13.04.1994
(73) Patentinhaber: CLOUTH Gummiwerke AG, D-50733 Köln (DE)
(72) Erfinder: ENGST, Wilhelm, D-5000 Köln 50 (DE)
(74) Vertreter: Schneider, Egon
(86) Internationale Anmeldenummer: DE9200419
(87) Internationale Veröffentlichungsnummer: WO9300162

(56) Entgegenhaltungen:
- AT-A- 348 491
- DE-A- 3 122 219
- DE-C- 3 608 952
- US-A- 4 497 147
- US-A- 4 684 562
- US-A- 5 011 007
- WORLD PATENTS INDEX Derwent Publications Ltd., London, GB; AN 76-67444X

## Beschreibung

Die Erfindung betrifft eine Matte zur Aufnahme von Kohlenwasserstoffen in flüssiger oder pastöser Form, wie z.B. Öle, Fette, Kraftstoffe oder Lösungsmittel, die in einer einseitig - nach oben - offenen Wanne oder dergleichen aus gegen Kohlenwasserstoffe beständigem oder wenigstens eine dagegen beständige Schicht enthaltendem Material angeordnet ist.

Es ist bekannt, daß flüssige oder pastöse Kohlenwasserstoffe zu bestimmten Werkstoffen eine höhere Affinität als gegenüber Wasser aufweisen. Damit kann eine Aufnahme bzw. Absorption der Kohlenwasserstoffe in aus diesen Werkstoffen gefertigten Körpern erfolgen (DE 39 23 299 A1).

Bisher hat man diese Eigenschaften eher als Nachteil angesehen, weil hieraus ein Aufquellen der aus den betreffenden Werkstoffen gefertigten Teile resultiert.

Die Erfindung zielt nun aber darauf ab, die bekannten Eigenschaften dieser Werkstoffe in vorteilhafter Weise zu nutzen, um im Sinne der Umweltschonung flüssige oder pastöse Kohlenwasserstoffe aufzunehmen, aufzufangen oder zu separieren.

Überall dort, wo nicht verhindert werden kann, daß solche Kohlenwasserstoffe aus einem Arbeits- bzw. Behandlungsprozeß emittieren bzw. emittiert werden, ist es von wesentlicher Bedeutung, daß diese nicht in unerwünschter Weise unmittelbar in die Umwelt, insbesondere in den Boden, gelangen oder dorthin verschleppt werden.

Aus der US-A-5 011 007 ist eine Wanne aus Vinylkunststoff oder Gummi bekannt, in die Zeitungspapier zur Aufnahme von abtropfendem Öl eingelegt ist. Das Papier ist aufgrund seiner Kapillarwirkung hinsichtlich Flüssigkeiten aufsaugend. Die Saugfähigkeit des Papiers beruht auf der Kapillarwirkung des Papiers. Der flüssige Kohlenwasserstoff, d.h. das Öl, wird nicht in die Werkstoffmatrix des Papiers eingebunden. Wird das Papier Nässe ausgesetzt, so wird zuerst das Wasser von dem Papier aufgesogen. Für die Aufnahme von flüssigen Kohlenwasserstoffen besteht keine Möglichkeit mehr. Zu dem hat das Papier den Nachteil, daß die aufgenommene Flüssigkeit durch Ausdrücken wieder aus dem Papier austritt. Eine Verschleppungsgefahr von aufgenommenen Kohlenwasserstoffen ist damit nicht beseitigt.

Aus AT-A- 348 491 ist ein schüttfähiges aus losen Teilchen bestehendes Ölbindemittel bekannt. Hierbei soll das Nichtzusammenbacken der benutzten Kautschukteilchen verhindert werden. Dieses Ölbindemittel aus losen Teilchen wirkt ebenfalls im wesentlichen aufsaugend. Ein Verschleppung von aufgenommenen Kohlenwasserstoffen in die Umwelt ist nicht vermieden. Eine präventive Anwendung des schüttfähigen Ölbindemittels kann daher nicht vorgenommen werden.

Deshalb hat die Erfindung die Schaffung gattungsgemäßer Matten zum Gegenstand, die sich im Bereich von Behandlungs- und Bearbeitungsanlagen oder dergleichen auf Böden, Rampen und Bedienungsgängen usw. auslegen lassen.

Nach der Erfindung sind dabei diese Matten in erster Linie gekennzeichnet durch mindestens einen platten- und/oder blockartigen Formkörper aus Öl- und/oder lösungsmittelabsorbierendem Werkstoff auf der Basis von z.B. NR-, IR-, IIR- oder BR-Kautschuk, der in einer einseitig - nämlich nach oben - offenen Wanne oder dergleichen aus Öl- und/oder lösungmittelresistentem oder wenigstens eine Öl- und/oder lösungsmittelresistente Schicht enthaltendem Material sitzt oder aufgenommen ist.

Als Werkstoff für den platten- oder blockartigen Formkörper kommen Kohlenwasserstoffe absorbierende bzw. aufnehmende Elastomere, z.B. NR-, IR-, IIR-, BR-, SBR-Elastomere, aber auch thermoplastische Elastomere (TPE), Thermoplaste oder Duroplaste, in Frage.

Zur Steigerung der Absorptionsfähigkeit können diese Materialien in poröser, zelliger oder geschäumter Form zu dem platten- und/oder blockartigen Formkörper verarbeitet werden. Vorzugsweise besteht der Formkörper aus miteinander in formhaltige Verbindung gebrachtem Gummigranulat oder aus Gummischnitzeln.

Die Auslegung solchermaßen ausgeführter Absorptionsmatten im Bereich von Behandlungs- und/oder Bearbeitungsanlagen erbringt den Vorteil, daß die hieraus mittels der behandelten bzw. bearbeiteten Werkstücke ausgetragenen organischen Kohlenwasserstoffe bei ihrem Abtropfen sicher aufgefangen und gegen unerwünschtes Verschleppen in die Umwelt festgehalten werden können.

Bewährt hat es sich nach der Erfindung, wenn das Gummigranulat bzw. die Gummischnitzel durch öl- und/oder lösungsmittelresistente Bindemittel und/oder durch Vulkanisation zum platten- und/oder blockartigen Formkörper verbunden sind.

Eine besonders hohe Effektivität der Absorptionsmatte ist erfindungsgemäß dann erreichbar, wenn das Gummigranulat bzw. die Gummischnitzel des Formkörpers porös sind, z.B. aus Zell-, Moos- oder Schaumgummi, bestehen. Selbstverständlich kann der Formkörper aber auch Granulat bzw. Schnitzel aus massivem Material enthalten.

Damit das im Verlauf der Absorption von organischem Kohlenwasserstoff auftretende Aufquellen des Gummigranulates bzw. der Gummischnitzel problemlos möglich ist, sieht die Erfindung vor, daß der platten- und/oder blockartige Formkörper zumindest über den größten Teil seiner Dicke mit Ausnehmungen, z.B. Nuten, Rinnen, Löchern oder einer Kombination hieraus, versehen ist. Möglich ist aber auch eine Profilierung der gesamten Oberfläche des Formkörpers und/oder die Anordnung von inneren Hohlräumen in diesem.

Die Wanne oder dergleichen besteht in weiterer Ausgestaltung der Erfindung aus einem öl- und/oder lösungsmittelbeständigen Elastomer, z.B. NBR-, CR-, ECO-, FKM und/oder sie enthält zumindest eine Sperrschicht aus öl- und/oder lösungsmittelbeständigem Material, bspw. eine Folie aus Polyimid, Polypropylen oder Polyäthylen. Es ist letztlich aber auch möglich, die Wanne aus Metall oder einem öl- und/oder lösungsmittelbeständigen Kunststoff, bspw. Plastomer oder Duromer, bestehen zu lassen.

Wenn eine erfindungsgemäße Absorptionsmatte mit aromatischen Kohlenwasserstoffen gesättigt ist, besteht in bekannter Weise die Möglichkeit einer thermischen Regenerierung, z.B. mittels Wasserdampf, Heißluft oder Vakuumdampf. Es kann aber auch eine Verbrennung in den dafür geeigneten Verbrennungsanlagen erfolgen. Darüber hinaus ist es möglich, die nicht im Gummimaterial angelagerten Kohlenwasserstoffe, welche sich aufgrund von Kapillarwirkungen in den Hohlräumen des Formkörpers befinden, durch Auspressen zu entfernen, so daß ein begrenzter Weitereinsatz der erfindungsgemäßen Absorptionsmatte erfolgen kann.

Das Granulat bzw. die Schnitzel des platten- und/oder blockartigen Formkörpers kann durch gegen organische Kohlenwasserstoffe resistente Bindemittel oder Kleber, durch Latexieren und/oder durch Vulkanisieren verbunden werden. Die Wanne oder dergleichen läßt sich mit dem platten- und/oder blockartigen Formkörper durch Vulkanisation fest verbinden. Es ist aber auch möglich, den platten- und/oder blockartigen Formkörper durch Verkleben in der Wanne oder dergleichen zu befestigen.

Selbstverständlich liegt auch eine Anordnung im Rahmen der Erfindung, bei welcher die Wanne unmittelbar von einem mit einer Sperrschicht versehenen Bauwerksboden oder -bodenbereich gebildet wird, auf dem dann der organische Kohlenwasserstoffe absorbierende oder aufnehmende Werkstoff als Bahnen- oder Mattenware verlegt ist.

Andererseits ist es erfindungsgemäß aber auch denkbar, eine Wanne oder eine Kapsel mit der Einlage aus organische Kohlenwasserstoffe absorbierendem oder aufnehmendem Werkstoff so vorzusehen, daß sie den Motor-/Getriebe-/Antriebsbereich eines Kraftfahrzeuges, und zwar vornehmlich eines Ackerschleppers, unterfängt und/oder umfaßt und damit zu verhindern, daß Öle, Fette und Kraftstoffe vom betreffenden Fahrzeug auf bzw. in den Boden gelangen. Im Falle einer diese Merkmale aufweisenden Kapsel für den Motor-/Getriebe-/Antriebsbereich eines Kraftfahrzeuges wird als Zusatzeffekt noch eine Geräuschabsorption oder -dämmung erreicht.

Die Zeichnung zeigt in
- Figur 1: mit räumlicher Teilansicht und etwa natürlicher Größe eine erste Ausführungsform einer Absorptionsmatte, während
- Figur 2: eine zweite Bauform einer solchen Absorptionsmatte wiedergibt.

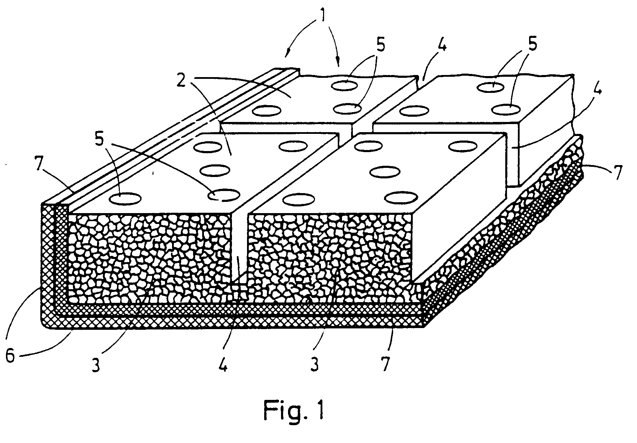

Die in Figur 1 der Zeichnung gezeigte Absorptionsmatte 1 soll insbesondere für das Auffangen von flüssigen, pastösen oder festen aromatischen Kohlenwasserstoffen eingesetzt werden. Sie weist einen platten- und/oder blockartigen Formkörper 2 auf, der aus miteinander in formhaltige Verbindung gebrachtem Gummigranulat 3 oder aus Gummischnitzeln 3 besteht. Als Werkstoffe kommen dabei z.B. in Frage NR-, IR-, IIR-, BR-, SBR-Elastomere, thermoplastische Elastomere (TPE), Thermoplaste oder auch Duroplaste.

Bei dem Granulat 3 oder den Schnitzeln 3 kann es sich dabei sowohl um massives Material als auch um poröses Material, wie Zell-, Moos- oder Schaumgummi handeln. Die formhaltige Verbindung zwischen den einzelnen Granulatkörpern bzw. -schnitzeln läßt sich durch Beifügung öl- und/oder lösungsmittelresistenter Bindemittel und/oder durch Vulkanisation erreichen. Auch ein Latexieren des Gummigranulates bzw. der Gunmischnitzel vor ihrem Verpressen und vor der Vulkanisation ist ohne weiteres denkbar.

Da die im platten- und/oder blockartigen Formkörper 1 enthaltenen Granulate oder Schnitzel 3 nach der Aufnahme der Kohlenwasserstoffe naturgemäß aufquellen, ist es wichtig, den platten- und/oder blockartiger Formkörper 2 zumindest über den größten Teil seiner Dicke mit Ausnehmungen, z.B. Nuten oder Rinnen 4, oder mit Löchern 5 auszustatten. Es ist aber auch möglich, eine Kombination solcher Ausnehmungen und Löcher vorzusehen, also den platten- und/oder blockartigen Formkörper 1 sowohl mit Nuten oder Rinnen 4 als auch mit Löchern 5 auszustatten, wie das die Figur 1 der Zeichnung zeigt.

Ein anderes wichtiges Ausgestaltungsmerkmal der Absorptionsmatte 1 besteht darin, daß der platten- und/oder blockartige Formkörper 2 in einer einseitig, nach oben offenen Wanne 6 oder dergleichen aufgenommen ist. Diese Wanne 6 oder dergleichen ist dabei insgesamt aus einem öl- und/oder lösungsmittelbeständigen Elastomer, z.B. NBR-, CR-, ECO-, FKM-Elastomer hergestellt. Es ist aber auch möglich, die Wanne 6 oder dergleichen lediglich mit einer öl- und/oder lösungsmittelundurchlässigen Sperrschicht 7 auszustatten, die bspw. von einer eingebetteten Polyimid-, Polypropylen- oder Polyäthylen-Folie gebildet werden kann. Alternativ läßt sich die Wanne 6 aber auch aus Metall oder einem öl- und/oder lösungsmittelbeständigen Kunststoff, wie Platomer oder Duromer, fertigen.

Obwohl es denkbar ist, die platten- und/oder blockartigen Formkörper 2 einfach lose und mit Klemmsitz in die Wanne 6 einzubringen, dürfte es zweckmäßiger sein, eine feste Verbindung der Wanne 6 oder dergleichen mit den platten- und/oder blockartigen Formkörpern 2 vorzusehen.

Die unabhängig von den platten- und/oder blockartigen Formkörpern 2 vorgefertigte Wanne 6 oder dergleichen läßt sich zu diesem Zweck am einfachsten durch Vulkanisation oder Verklebung fest mit dieser verbinden.

Die vorzugsweise mit ihrer ganzen Dicke in der Wanne 6 oder dergleichen aufgenommenen platten- und/oder blockartigen Formkörper 2 können mit ihren Gummigranulaten oder Gummischnitzeln 3 eine relativ große Menge flüssiger Kohlenwasserstoffe aufnehmen, bevor sie ihren Sättigungszustand erreicht haben. Dann ist in bekannter Weise eine thermische Regenerierung, z.B. mittels Wasserdampf, Heißluft oder Vakuumdampf, möglich. Es kann aber auch eine Verbrennung in den dafür geeigneten Verbrennungsanlagen erfolgen, sofern die Wanne 6 nicht aus einem Metall besteht.

Darüber hinaus ist es möglich, die nicht im Gummi angelagerten Kohlenwasserstoffe, welche sich aufgrund von Kapillarwirkungen in den Hohlräumen des Formkörpers 2 befinden, durch Auspressen des letzteren zu entfernen, so daß ein begrenzter Weitereinsatz der Absorptionsmatte 1 erfolgen kann.

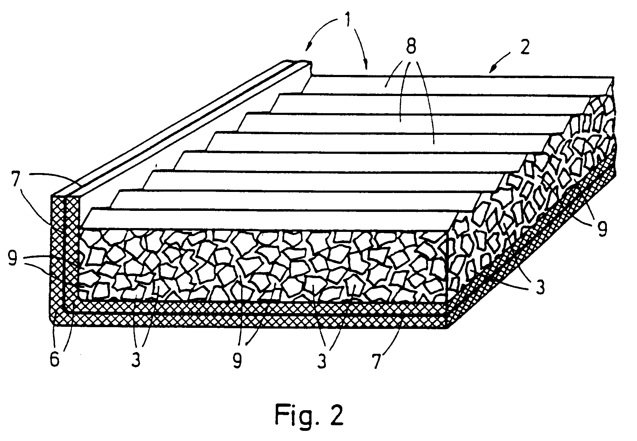

In Fig. 2 der Zeichnung ist noch eine abgewandelte Ausführungsform einer Absorptionsmatte 1 zu sehen. Sie unterscheidet sich von demjenigen nach Fig. 1 der Zeichnung im wesentlichen dadurch, daß sie auf seiner gesamten Oberfläche eine relativ grobe Struktur, bspw. in Form einer Profilierung 8 erhält, die bspw. aus Riffelungen, Waffelmustern, Kordelungen oder auch Noppen bestehen kann.

Darüber hinaus hat es sich bewährt, im Inneren des platten- und/oder blockartigen Formkörpers 2 Hohlräume 9 vorzusehen, die auch unabhängig von der Oberflächenstrukturierung vorhanden sein können. Die Hohlräume 9 zwischen dem Granulat 3 oder den Schnitzeln 3 und die Korngröße des Granulates 3 oder der Schnitzel 3 lassen sich dabei in vorteilhafter Weise so bemessen, daß die Quellung der Granulat- oder Schnitzelteile zu keinen nennenswerten äußeren Verformungen des Formkörpers 2 führen.

Die vorstehend anhand der Fig. 1 und 2 der Zeichnung erläuterten Ausführungsbeispiele einer Absorptionsmatte können in vorteilhafter Weise auch so eingesetzt werden, daß sie ständig den Motor-/Getriebe-/Antriebsbereich eines Kraftfahrzeuges, und zwar insbesondere eines Ackerschleppers, nach Art einer Wanne unterfangen oder aber nach Art einer Kapsel umfassen. Es kann dann wirksam verhindert werden, daß Fette, Öle oder Kraftstoffe vom Motor, vom Getriebe oder vom Antrieb her auf und/oder in den Boden gelangen, welcher vom Kraftfahrzeug überfahren wird.

Andererseits ist es aber auch noch denkbar, eine Anordnung vorzusehen, bei der die Wanne unmittelbar von einem mit einer Sperrschichtauflage versehenen Bauwerksboden oder -bodenbereich gebildet ist, auf dem dann der organische Kohlenwasserstoffe absorbierende oder aufnehmende Werkstoff als Bahnen- oder Mattenware verlegt werden kann.

## Patentansprüche

1. Matte zur Aufnahme von Kohlenwasserstoffen in flüssiger oder pastöser Form, wie z.B. Öle, Fette, Kraftstoffe oder Lösungsmittel, die in einer einseitig - nach oben - offenen Wanne (6) oder dergleichen aus gegen Kohlenwasserstoffe beständigem oder wenigstens eine dagegen beständige Schicht enthaltendem Material angeordnet ist,
**gekennzeichnet durch**
mindestens einen platten- und/oder blockartigen Formkörper (2) aus einem Kohlenwasserstoffe absorbierenden Elastomer, z. B. aus NR-, IR-, IIR-, BR-Elastomer, aus thermoplastischem Elastomer (TPE), aus Thermoplast oder Duroplast.

2. Matte nach Anspruch 1,
**dadurch gekennzeichnet,**
daß der Werkstoff des platten- und/oder blockartigen Formkörpers (2) in poröser, zelliger oder geschäumter Form verarbeitet ist.

3. Matte nach Anspruch 1 oder 2,
**dadurch gekennzeichnet,**
daß der platten- und/oder blockartige Formkörper (2) aus miteinander in formhaltige Verbindung gebrachtem Granulat (3) oder aus Schnitzeln (3), basierend auf einem organische Kohlenwasserstoffe absorbierenden Elastomer, z.B. NR, IR-, IIR-, BR-Elastomer, aus thermoplastischem Elastomer (TPE), aus Thermoplast oder aus Duroplast, besteht.

4. Matte nach einem der Ansprüche 1 bis 3,
**dadurch gekennzeichnet,**
daß das Granulat (3) bzw. die Schnitzel (3) durch gegen organische Kohlenwasserstoffe resistente Bindemittel oder Kleber, durch Latexieren und/oder durch Vulkanisieren zum platten- und/oder blockartigen Formkörper (2) verbunden ist bzw. sind.

5. Matte nach einem der Ansprüche 1 bis 4,
**dadurch gekennzeichnet,**
daß das Granulat (3) bzw. die Schnitzel (3) des Formkörpers (2) porös sind, z.B. aus Zell-, Moos- oder Schaumgummi bestehen.

6. Matte nach einem der Ansprüche 1 bis 5,
**dadurch gekennzeichnet,**
daß der platten- und/oder blockartige Formkörper (2) zumindest über den größten Teil seiner Dicke mit Ausnehmungen (4, 5), z.B. Nuten oder Rinnen (4) und Löchern (5), mit Oberflächenprofilierungen (8) und/oder mit inneren Hohlräumen (9) oder auch mit einer Kombination hieraus, versehen ist.

7. Matte nach einem der Ansprüche 1 bis 6,
**dadurch gekennzeichnet,**
daß die Hohlräume (9) zwischen dem Granulat (3) oder den Schnitzeln (3) und die Korngröße des Granulates (3) oder der Schnitzel (3) so bemessen sind, daß bei Quellung der Teile nennenswerte äußere Verformungen des Formkörpers (2) vermieden sind.

8. Matte nach einem der Ansprüche 1 bis 7,
**dadurch gekennzeichnet,**
daß die Wanne (6) oder dergleichen aus einem gegen organische Kohlenwasserstoffe weitgehend beständigen Elastomer, wie z.B. NBR, CR, ECO, FKM besteht und/oder eine Sperrschicht (7) aus einem gegen organische Kohlenwasserstoffe resistenten Material, bspw. aus einer Polyimid-, Polyäthylen- oder Polypropylen-Folie, enthält.

9. Matte nach einem der Ansprüche 1 bis 8,
**dadurch gekennzeichnet,**
daß die Wanne (6) oder dergleichen mit dem platten- und/oder blockartigen Formkörper (2) durch Vulkanisation fest verbunden ist.

10. Matte nach einem der Ansprüche 1 bis 8,
**dadurch gekennzeichnet,**
daß die Wanne (6) oder dergleichen mit dem platten- und/oder blockartigen Formkörper (2) durch Verkleben fest verbunden ist.

11. Matte nach Anspruch 1,
**dadurch gekennzeichnet,**
daß die Wanne (6) unmittelbar von einem mit einer Sperrschichtauflage (7) versehenen Bauwerksboden oder -bodenbereich gebildet ist, auf dem der Kohlenwasserstoffe absorbierende oder aufnehmende Werkstoff als Bahnen- oder Mattenware (2) verlegt bzw. verlegbar ist.

12. Matte nach einem der Ansprüche 1 bis 10,
**dadurch gekennzeichnet,**
daß eine Wanne (6) oder eine Kapsel mit der Einlage (2) aus Kohlenwasserstoffe absorbierendem oder aufnehmendem Werkstoff dem Motor-/Getriebe-/Antriebsbereich eines Kraftfahrzeuges, insbesondere eines Ackerschleppers, zugeordnet und damit diesen unterfangend und/oder umfassend angeordnet ist.

## Claims

1. Mat for absorbing hydrocarbons in liquid or paste form, such as, for example, oils, fats, fuels or solvents, which mat is disposed in a trough (6) or the like, which is open at one end - upwardly - and formed from material which is resistant to hydrocarbons or includes at least one layer which is resistant thereto, characterised by at least one plate- and/or block-shaped moulding (2) formed from an elastomeric material which absorbs hydrocarbons, e.g. from NR, IR, IIR or BR elastomeric material, from thermoplastic elastomeric material (TPE), from thermoplastic material or thermosetting plastics material.

2. Mat according to claim 1, characterised in that the material of the plate- and/or block-shaped moulding (2) is processed in porous, cellular or foamed form.

3. Mat according to claim 1 or 2, characterised in that the plate- and/or block-shaped moulding (2) is formed from granules (3), which are mutually linked so as to keep their form, or from shavings (3), based on an elastomeric material which absorbs organic hydrocarbons, e.g. NR, IR, IIR or BR elastomeric material, from thermoplastic elastomeric material (TPE), from thermoplastic material or from thermosetting plastics material.

4. Mat according to one of claims 1 to 3, characterised in that the granules (3) or respectively the shavings (3) are connected by binding agents or adhesives, which are resistant to organic hydrocarbons, by latexing and/or by vulcanising to form the plate- and/or block-shaped moulding (2).

5. Mat according to one of claims 1 to 4, characterised in that the granules (3) or respectively the shavings (3) of the moulding (2) are porous, e.g. they are formed from cellular, sponge or foam rubber.

6. Mat according to one of claims 1 to 5, characterised in that the plate- and/or block-shaped moulding (2) is provided, at least over the largest part of its thickness, with recesses (4, 5), e.g. grooves or channels (4) and holes (5), with surface profilings (8) and/or with internal cavities (9) or even with a combination thereof.

7. Mat according to one of claims 1 to 6, characterised in that the cavities (9) between the granules (3) or the shavings (3) and the particle size of the granules (3) or of the shavings (3) are so dimensioned that, when the parts swell, considerable external deformations of the moulding (2) are avoided.

8. Mat according to one of claims 1 to 7, characterised in that the trough (6) or the like is formed from an elastomeric material which is largely resistant to organic hydrocarbons, such as, for example NBR, CR, ECO or FKM elastomeric material, and/or includes a barrier layer (7) formed from a material which is resistant to organic hydrocarbons, for example from a polyimide, polyethylene or polypropylene film.

9. Mat according to one of claims 1 to 8, characterised in that the trough (6) or the like is securely connected to the plate- and/or block-shaped moulding (2) by vulcanisation.

10. Mat according to one of claims 1 to 8, characterised in that the trough (6) or the like is securely connected to the plate- and/or block-shaped moulding (2) by adhesion.

11. Mat according to claim 1, characterised in that the trough (6) is formed directly by a base or base region of a structure, which is provided with a barrier layer support (7) and on which the material, which absorbs or receives hydrocarbons, is laid or can be laid as webbing or matting (2).

12. Mat according to one of claims 1 to 10, characterised in that a trough (6) or a box, having the insert (2) formed from a material which absorbs or receives hydrocarbons, is associated with the engine/gear/drive region of an automotive vehicle, more especially a tractor, and is disposed so as to support and/or surround said vehicle.

## Revendications

1. Matelas pour capter des hydrocarbures sous forme liquide ou pâteuse, comme par exemple des huiles, des graisses, des carburants ou des solvants, qui est disposé dans une cuve (6) ouverte d'un côté - vers le haut - ou analogue, cette cuve étant réalisée en une matière qui résiste aux hydrocarbures ou qui comporte au moins une couche résistant aux hydrocarbures,
caractérisé par
au moins un corps en forme de plaques et/ou de blocs (2) réalisé en un élastomère absorbant les hydrocarbures, par exemple en élastomère NR, IR, IIR, BR, en élastomère thermoplastique (TPE), en thermoplastique ou en thermodurcissable.

2. Matelas selon la revendication 1, caractérisé en ce que la matière du corps en forme de plaques et/ou de blocs (2) est réalisée sous une forme poreuse, cellulaire ou en forme de mousse.

3. Matelas selon la revendication 1 ou 2, caractérisé en ce que le corps en forme de plaques et/ou de blocs (2) est constitué de granulés (3) ou de copeaux (3) mis en forme les uns avec les autres par liaison et basés sur un élastomère absorbant les hydrocarbures organiques, par exemple un élastomère NR, IR, IIR, BR, en élastomère thermoplastique (TPE), en thermoplastique ou en thermodurcissable.

4. Matelas selon une des revendications 1 à 3, caractérisé en ce que les granulés (3) ou les copeaux (3) sont liés par un agent liant ou une colle résistant aux hydrocarbures organiques, par le traitement avec un latex et/ou par vulcanisation pour obtenir le corps en forme de plaques et/ou de blocs (2).

5. Matelas selon une des revendications 1 à 4, caractérisé en ce que les granulés (3) ou les copeaux (3) du corps (2) sont poreux, en étant par exemple constitués de caoutchouc cellulaire, sous forme de mousse ou expansé.

6. Matelas selon une des revendications 1 à 5, caractérisé en ce que le corps en forme de plaques et/ou de blocs (2) est muni, sur au moins la plus grande partie de son épaisseur, d'évidements (4, 5), par exemple des rainures ou des canaux (4) et des trous (5), des profilages de surface (8) et/ou des évidements internes (9) ou d'une combinaison de ceux-ci.

7. Matelas selon une des revendications 1 à 6, caractérisé en ce que les évidements (9) entre les granulés (3) ou les copeaux (3) et la dimension des granulés (3) ou des copeaux (3) sont déterminés de telle sorte que, lors du gonflement des parties, on évite une déformation notable du corps (2).

8. Matelas selon une des revendications 1 à 7, caractérisé en ce que la cuve (6), ou analogue, est constituée d'un élastomère résistant largement aux hydrocarbures organiques, comme par exemple NBR, CR, ECO, FKM, et/ou comporte une couche de protection (7) réalisée en une matière résistant aux hydrocarbures organiques, par exemple en une feuille de polyimide, de polyéthylène ou de polypropylène.

9. Matelas selon une des revendications 1 à 8, caractérisé en ce que la cuve (6), ou analogue, est solidement liée avec le corps en forme de plaques et/ou de blocs (2) par vulcanisation.

10. Matelas selon une des revendications 1 à 8, caractérisé en ce que la cuve (6), ou analogue, est solidement liée avec le corps en forme de plaques et/ou de blocs (2) par collage.

11. Matelas selon la revendication 1, caractérisé en ce que la cuve (6) est réalisée directement par un sol, ou une région de sol, d'un atelier muni d'une couche de protection (7), la matière absorbant ou captant les hydrocarbures étant disposée, ou pouvant être disposée, sur ce sol ou cette région de sol, sous forme d'articles en bandes ou en matelas (2).

12. Matelas selon une des revendications 1 à 10, caractérisé en ce qu'une cuve (6) ou une capsule avec le revètement (2), réalisé en une matière qui absorbe ou qui capte les hydrocarbures, est adjointe à une zone du moteur/de la transmission/de l'entraînement d'un véhicule automobile, en particulier d'un tracteur agricole, en étant ainsi disposée de façon à la soutenir et/ou l'entourer.
